# EUROPEAN PATENT SPECIFICATION

(11) **EP 1 418 751 B1**
(45) Date of publication and mention of the grant of the patent: **29.11.2006**
(21) Application number: 03256790.1
(22) Date of filing: 28.10.2003
(51) Int. Cl.: H04N 5/217, H04N 5/30

(54) **CCD camera with defective cell compensation**
CCD-Kamera mit Kompensation defekter Zellen
Caméra CCD avec compensation de cellules défectueuses

(30) Priority: 28.10.2002 KR 2002065846
(43) Date of publication of application: 12.05.2004
(60) Divisional application: 06111906.1
(73) Proprietor: SAMSUNG ELECTRONICS CO., LTD., Suwon-si, Gyeonggi-do 442-742 (KR)
(72) Inventor: Hong, Sung-bin, Yongin-city, Gyunggi-do (KR)
(74) Representative: Geary, Stuart Lloyd

(56) References cited:
- EP-A- 0 222 548
- EP-A- 0 440 563
- EP-A- 0 762 741
- EP-A- 1 045 578
- EP-A- 1 261 197
- US-B1- 6 307 393

## Description

The present invention relates to a CCD camera comprising a CCD device, a shutter for controlling the exposure of the CCD device, a memory and control means configured to perform a CCD defect detection process comprising opening the shutter for a predetermined period, analysing the output of the CCD device produced by said opening of the shutter for a predetermined period, and storing the location of any defective CCD cells, determined by said analysis, in the memory.

Charge coupled devices (CCDs) are widely used as image sensors in electronic cameras. However, CCDs can become damaged after manufacture due to ultraviolet light, gamma rays and other causes.

In a known method of ameliorating the problem of CCD defects, the coordinates of defective CCD cells are stored in a memory. The defective cells are identified by exposing the CCD, e.g. by opening a shutter, to light for a period of time and analysing the CCD output signal. The signals from the damaged or defective pixels can be replaced with the signal from an adjacent cell during image capture.

However, the conventional method for correcting defective CCD cells detects defective CCD cells only at power up. Therefore, compensation is not provided where defects occur later during use due to heat and dark current abnormalities. US-B-6,307,393 describes an apparatus having the pre-characterising features of claim 1.

A CCD camera according to the present invention is characterised in that the control means is configured to periodically perform said defect detection process during camera operation.

Preferably, the control means is configured such that said analysis comprises comparing the output of each cell of the CCD device with a threshold value and determining that a cell is defective if its output is greater than the threshold value.

Preferably, the control means is configured to provide substitute output signals for defective cells, whose locations are stored in the memory, during image capture. More preferably, the control means is configured to produce said substitute signals by calculating an average from the signals from cells neighbouring defective cells.

An embodiment of the present invention will now be described, by way of example, with reference to the accompanying drawings, in which:
Figure 1 is a block diagram of a CCD camera according to the present invention;
Figure 2 is a flowchart illustrating a method of compensating for defective CCD cells in the CCD camera shown in Figure 1; and
Figure 3 is a timing chart illustrating shutter driving periods obtained by the method of Figure 2.

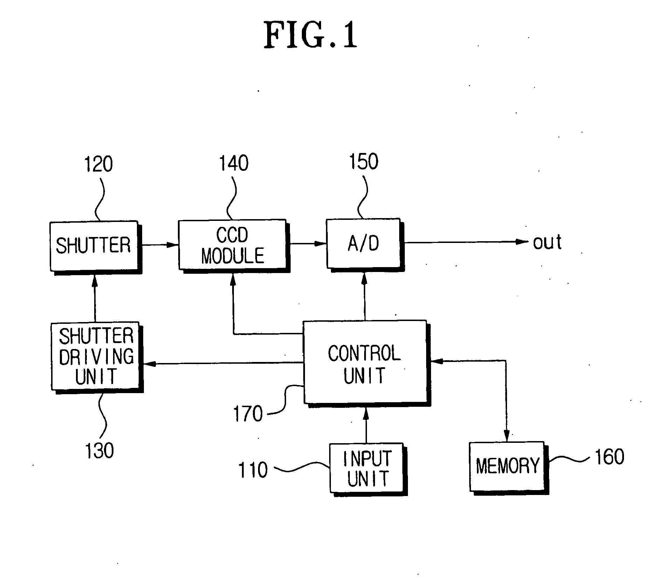

Referring to Figure 1, a CCD camera includes an input unit 110, a shutter 120, a shutter driving unit 130, a CCD module 140, an A/D converter 150, a memory 160 and a control unit 170.

The input unit 110 comprises a plurality of user-operable keys and transmits CCD camera operation commands to the control unit in response to user operation of the user operable keys. The shutter 120 is closed to prevent light falling on the CCD module 140 and is opened to allow light to fall on the CCD module 140. The shutter driving unit 130 operates the shutter 120 under the control of the control unit 170. The CCD module 140 has a plurality of CCD cells in a suitable arrangement and outputs electric signals based on the light incident thereon through the shutter 120. The A/D converter 150 digitises the analogue signals output from the CCD module 140. The memory 170 stores the digital signals provided by the A/D converter 150 for individual CCD cells.

As described in greater detail below, the control unit 170 controls the overall operation of the CCD camera, detects CCD cells having small defects and enables corrected signals to be produced for defective CCD cells during operation.

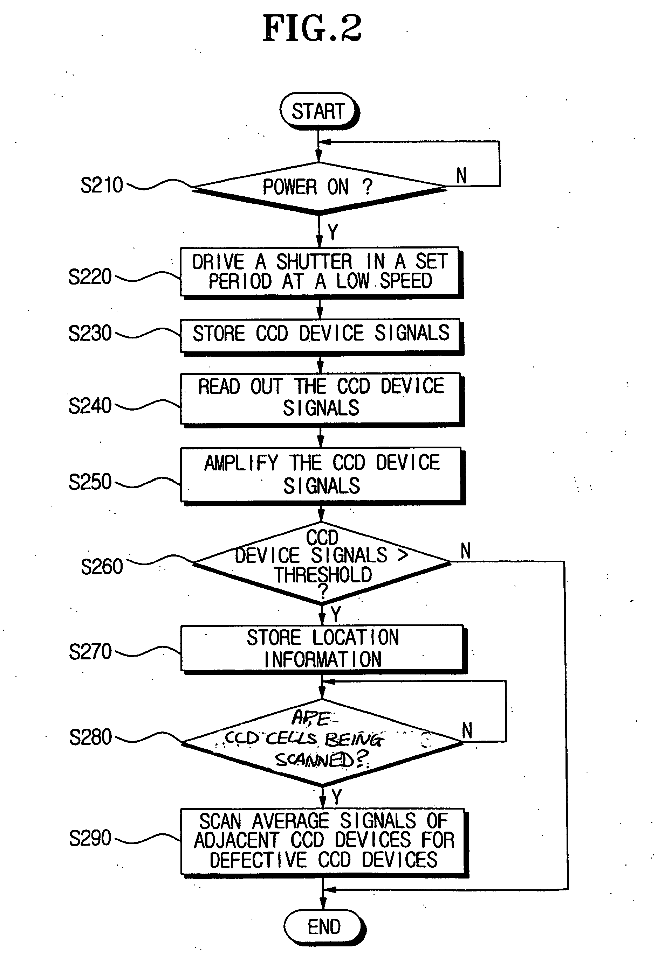

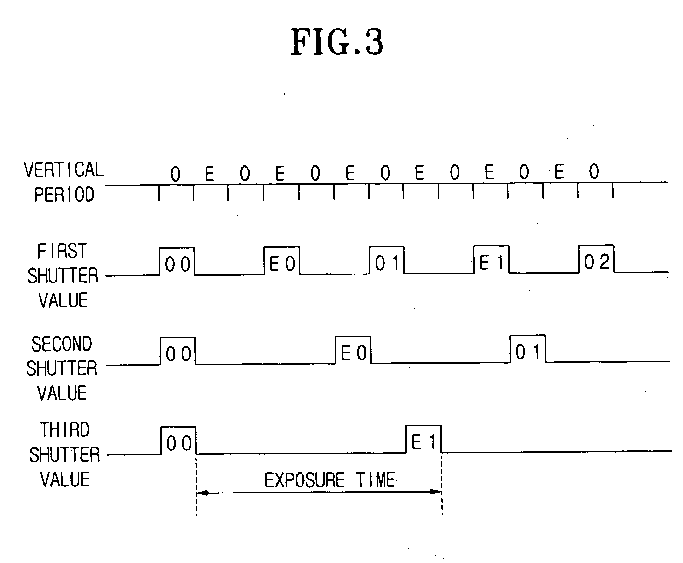

The method illustrated in Figure 2 begins with the determination of whether power has been applied by a user using the input unit 110 in step 210 (S210). In step 220, the control unit 170 periodically drives the shutter 120 by means of the shutter driving unit 130 (S220). The control unit 170 controls the shutter driving unit 130 to operate the shutter at a low speed. Furthermore, the control unit controls the shutter driving unit 130 to drive the shutter 120 alternately in odd fields and even fields. Examples of suitable shutter operations are shown in Figure 3.

When light is incident on the CCD module 140 as the shutter operates at the low speed as described above, individual CCD cells output signals in dependence on the light incident thereon. In step 230, the control unit 170 stores the CCD cell signals sequentially in the memory 160 (S230). Thereafter, in step 240, the control unit 170 reads out the respective electric signals of the CCD cells stored in the memory 160 (S240), amplifies the CCD cell signals stored in the memory 160 by a certain gain level in step 250 (S250), and compares the read-out signals with a preset CCD defect threshold level in decision step 260 (S260). If a CCD cell signal is larger than the CCD threshold level ("Yes" path from decision step 260), the control unit 170 stores, in a second region of the memory 160, location information of the CCD cell in step 270(S270). A CCD cell signal greater than the CCD defect level indicates a defective CCD cell.

The control unit 170 arranges and stores in the memory 160 the CCD cell signals larger than the CCD defect threshold level in descending order. In decision step 280, the control unit 170 verifies whether the CCD cells are being scanned (S280). In step 290 ("Yes" path from decision step 280), the control unit 170 generates average electric signals from the CCD cells adjacent to the defective CCD cells, based on the location information stored in the memory 160, which is output instead the actual signal from the defective CCD cell (S290).

A CCD camera employing the above described method for detecting defective CCDs periodically operates at low speed to detect defective CCD cells. The CCD camera can then detect and correct defects not discovered during initial quality checks. The CCD camera amplifies signals that are generated by heat and dark currents within the camera itself, and compares the amplified levels to the CCD defect threshold level so that it can detect and correct even tiny defects.

As described above, a CCD camera and method for correction of signals from defective CCD cells according to certain embodiments of the present invention can detect and correct defects upon power-up as well as during use of the camera. This enables the CCD camera to provide high-quality images to users even though the CCD module may have a plurality of defective CCD cells. Thus, wasting of resources is prevented.

### Description for the following Contracting State(s) : DE

The present invention relates to a CCD camera comprising a CCD device, a shutter for controlling the exposure of the CCD device, a memory and control means configured to perform a CCD defect detection process comprising opening the shutter for a predetermined period, analysing the output of the CCD device produced by said opening of the shutter for a predetermined period, and storing the location of any defective CCD cells, determined by said analysis, in the memory.

Charge coupled devices (CCDs) are widely used as image sensors in electronic cameras. However, CCDs can become damaged after manufacture due to ultraviolet light, gamma rays and other causes.

In a known method of ameliorating the problem of CCD defects, the coordinates of defective CCD cells are stored in a memory. The defective cells are identified by exposing the CCD, e.g. by opening a shutter, to light for a period of time and analysing the CCD output signal. The signals from the damaged or defective pixels can be replaced with the signal from an adjacent cell during image capture.

However, the conventional method for correcting defective CCD cells detects defective CCD cells only at power up. Therefore, compensation is not provided where defects occur later during use due to heat and dark current abnormalities.

EP-A-1 261 197 is relevant for Germany only under Art. 54(3) EPC and describes a CCD camera which operates during camera operation, but which has a multi-stage test for defects.

A CCD camera according to the present invention is characterised in that the control means is configured such that said analysis comprises comparing the output of each cell of the CCD device with a threshold value and determining that a cell is defective if its output is greater than the threshold value.

Preferably, the control means is configured to provide substitute output signals for defective cells, whose locations are stored in the memory, during image capture. More preferably, the control means is configured to produce said substitute signals by calculating an average from the signals from cells neighbouring defective cells.

An embodiment of the present invention will now be described, by way of example, with reference to the accompanying drawings, in which:
Figure 1 is a block diagram of a CCD camera according to the present invention;
Figure 2 is a flowchart illustrating a method of compensating for defective CCD cells in the CCD camera shown in Figure 1; and
Figure 3 is a timing chart illustrating shutter driving periods obtained by the method of Figure 2.

Referring to Figure 1, a CCD camera includes an input unit 110, a shutter 120, a shutter driving unit 130, a CCD module 140, an A/D converter 150, a memory 160 and a control unit 170.

The input unit 110 comprises a plurality of user-operable keys and transmits CCD camera operation commands to the control unit in response to user operation of the user operable keys. The shutter 120 is closed to prevent light falling on the CCD module 140 and is opened to allow light to fall on the CCD module 140. The shutter driving unit 130 operates the shutter 120 under the control of the control unit 170. The CCD module 140 has a plurality of CCD cells in a suitable arrangement and outputs electric signals based on the light incident thereon through the shutter 120. The A/D converter 150 digitises the analogue signals output from the CCD module 140. The memory 170 stores the digital signals provided by the A/D converter 150 for individual CCD cells.

As described in greater detail below, the control unit 170 controls the overall operation of the CCD camera, detects CCD cells having small defects and enables corrected signals to be produced for defective CCD cells during operation.

The method illustrated in Figure 2 begins with the determination of whether power has been applied by a user using the input unit 110 in step 210 (S210). In step 220, the control unit 170 periodically drives the shutter 120 by means of the shutter driving unit 130 (S220). The control unit 170 controls the shutter driving unit 130 to operate the shutter at a low speed. Furthermore, the control unit controls the shutter driving unit 130 to drive the shutter 120 alternately in odd fields and even fields. Examples of suitable shutter operations are shown in Figure 3.

When light is incident on the CCD module 140 as the shutter operates at the low speed as described above, individual CCD cells output signals in dependence on the light incident thereon. In step 230, the control unit 170 stores the CCD cell signals sequentially in the memory 160 (S230). Thereafter, in step 240, the control unit 170 reads out the respective electric signals of the CCD cells stored in the memory 160 (S240), amplifies the CCD cell signals stored in the memory 160 by a certain gain level in step 250 (S250), and compares the read-out signals with a preset CCD defect threshold level in decision step 260 (S260). If a CCD cell signal is larger than the CCD threshold level ("Yes" path from decision step 260), the control unit 170 stores, in a second region of the memory 160, location information of the CCD cell in step 270(S270). A CCD cell signal greater than the CCD defect level indicates a defective CCD cell.

The control unit 170 arranges and stores in the memory 160 the CCD cell signals larger than the CCD defect threshold level in descending order. In decision step 280, the control unit 170 verifies whether the CCD cells are being scanned (S280). In step 290 ("Yes" path from decision step 280), the control unit 170 generates average electric signals from the CCD cells adjacent to the defective CCD cells, based on the location information stored in the memory 160, which is output instead the actual signal from the defective CCD cell (S290).

A CCD camera employing the above described method for detecting defective CCDs periodically operates at low speed to detect defective CCD cells. The CCD camera can then detect and correct defects not discovered during initial quality checks. The CCD camera amplifies signals that are generated by heat and dark currents within the camera itself, and compares the amplified levels to the CCD defect threshold level so that it can detect and correct even tiny defects.

As described above, a CCD camera and method for correction of signals from defective CCD cells according to certain embodiments of the present invention can detect and correct defects upon power-up as well as during use of the camera. This enables the CCD camera to provide high-quality images to users even though the CCD module may have a plurality of defective CCD cells. Thus, wasting of resources is prevented.

## Claims (Claims for the following Contracting State(s): GB, IT, NL)

1. A CCD camera comprising:
a CCD device (140),
a shutter (120) for controlling the exposure of the CCD device,
a memory (160), and
control means (130, 170) configured to perform a CCD defect detection process comprising:
opening the shutter (120) for a predetermined period,
analysing the output of the CCD device (140) produced by said opening of the shutter for a predetermined period, and
storing the location of any defective CCD cells, determined by said analysis, in the memory (160), wherein,
the control means is configured to periodically perform said defect detection process while the camera is powered for use, and, in a further period, to use the stored location of defective CCD cells to correct images subsequently taken using the camera.

2. A camera according to claim 1, wherein the control means (130, 170) is configured such that said analysis comprises comparing the output of each cell of the CCD device (140) with a threshold value and determining that a cell is defective if its output is greater than the threshold value.

3. A camera according to claim 1 or 2, wherein the control means (130, 170) is configured to provide substitute output signals for defective cells, whose locations are stored in the memory (160), during image capture.

4. A camera according to claim 3, wherein the control means (130, 170) is configured to produce said substitute signals by calculating an average from the signals from cells neighbouring defective cells.

5. A camera according to any one of claims 1 to 4, wherein the control means (130, 170) is adapted to operate the shutter at a low speed.

6. A camera according to any preceding claim, wherein the control means (130, 170) is adapted to operate the shutter based on the vertical period of the CCD device (140).

7. A camera according to any preceding claim, wherein the control means (130, 170) is adapted to alternately operate the shutter in odd fields and even fields of the CCD cells.

8. A camera according to claim 2 or 3, wherein:
during the comparing operation, the control means (130, 170) is operable to amplify the output of the individual CCD cells read out of the memory (160) to a certain level and compares the amplified output to the threshold value; and
during the substitution operation, the control means (130, 170) is operable to arrange and store, in a second region of the memory, in a descending order of output values, location information relating to the CCD cells having outputs larger than the threshold value.

9. A method of operating a CCD camera having a CCD device (140), the method comprising a defect detection process including the steps of:
exposing the CCD device (140) for a predetermined period;
analysing the output of the CCD device (140) produced by said exposure of CCD device (140) for a predetermined period;
storing the location of any defective CCD cells determined by said analysis; and
periodically performing said defect detection process while the camera is powered for use, and in a further period, using the stored location of defective CCD cells to correct images subsequently taken using the camera.

10. A method according to claim 9, wherein the step of comparing comprises:
amplifying the outputs of the individual CCD cells; and
comparing the amplified outputs of the CCD cells to the threshold value.

11. A method according to claim 9, comprising:
arranging in a descending order of output values, location information relating to the CCD cells having outputs larger than the threshold value, after comparing the outputs of the individual CCD cells to the threshold value.

12. A method according to claim 11, wherein:
the arranging step comprises storing the arranged output values.

## Claims (Claims for the following Contracting State(s): DE)

1. A CCD camera comprising:
a CCD device (140),
a shutter (120) for controlling the exposure of the CCD device,
a memory (160), and
control means (130, 170) configured to perform a CCD defect detection process comprising:
opening the shutter (120) for a predetermined period,
analysing the output of the CCD device (140) produced by said opening of the shutter for a predetermined period, and
storing the location of any defective CCD cells, determined by said analysis, in the memory (160), wherein
the control means (130, 170) is configured to periodically perform said CCD defect detection process, while the camera is powered for use
**characterised in that** the control means (130, 170) is configured to operate the shutter at a low speed during the defect detection process.

2. A camera according to claim 1, wherein the control means (130, 170) is configured to provide substitute output signals for defective cells, whose locations are stored in the memory (160), during image capture.

3. A camera according to claim 2, wherein the control means (130, 170) is configured to produce said substitute signals by calculating an average from the signals from cells neighbouring defective cells.

4. A camera according to claim 1, 2 or 3, wherein the control means (130, 170) is adapted to operate the shutter based on the vertical period of the CCD device (140).

5. A camera according to any preceding claim, wherein the control means (130, 170) is adapted to alternately operate the shutter in odd fields and even fields of the CCD cells.

6. A camera according to claim 2 or 3, wherein:
during the comparing operation, the control means (130, 170) is operable to amplify the output of the individual CCD cells read out of the memory (160) to a certain level and compares the amplified output to the threshold value; and
during the substitution operation, the control means (130, 170) is operable to arrange and store, in a second region of the memory, in a descending order of output values, location information relating to the CCD cells having outputs larger than the threshold value.

7. A method of operating a CCD camera having a CCD device (140), the method comprising a defect detection process including the steps of:
exposing the CCD device (140) for a predetermined period;
analysing the output of the CCD device (140) produced by said exposure of CCD device (140) for a predetermined period; and
storing the location of any defective CCD cells determined by said analysis, wherein said defect detection process is performed periodically while the camera is powered for use ,
**characterised by** operating the shutter at a low speed during the defect detection process.

8. A method according to claim 7, wherein the step of comparing comprises:
amplifying the outputs of the individual CCD cells; and
comparing the amplified outputs of the CCD cells to the threshold value.

9. A method according to claim 7, comprising:
arranging in a descending order of output values, location information relating to the CCD cells having outputs larger than the threshold value, after comparing the outputs of the individual CCD cells to the threshold value.

10. A method according to claim 9, wherein:
the arranging step comprises storing the arranged output values.

## Patentansprüche (Patentansprüche für folgende(n) Vertragsstaat(en): GB, IT, NL)

1. CCD-Kamera mit:
einem CCD-Gerät (170),
einer Blende (120) zum Steuern der Belichtung des CCD-Gerätes,
einem Speicher (160), und
Steuereinrichtungen (130, 170), die konfiguriert sind, einen CCD-Defektfeststellungsprozess durchzuführen,
mit:
Öffnen der Blende (120) für einen vorbestimmten Zeitraum,
Analysieren der Ausgabe des CCD-Gerätes (140), die durch das Öffnen der Blende für eine vorbestimmten Zeitraum erzeugt wird und
Speichern der durch die Analyse bestimmten Position jeder defekten CCD-Zelle in dem Speicher (160), wobei,
die Steuereinrichtung konfiguriert ist, periodisch den Defektfeststellungsprozess durchzuführen, während die Kamera zur Verwendung leistungsbetrieben ist, und in einem weiteren Zeitraum, die gespeicherte Position der defekten CCD-Zellen zu verwenden, um Bilder zu korrigieren, die danach bei der Verwendung der Kamera aufgenommen werden,

2. Kamera nach Anspruch 1, wobei die Steuereinrichtung (130, 170) so konfiguriert ist, dass die Analyse das Vergleichen der Ausgabe jeder Zelle des CCD-Gerätes (140) mit einem Schwellenwert und das Bestimmen, dass eine Zelle defekt ist, wenn ihre Ausgabe größer als der Schwellenwert ist, umfasst.

3. Kamera nach Anspruch 1 oder 2, wobei die Steuereinrichtung (130, 170) konfiguriert ist, während der Bildaufnahme Ersatzausgabesignale für defekte Zellen bereitzustellen, deren Positionen in dem Speicher (160) gespeichert sind.

4. Kamera nach Anspruch 3, wobei die Steuereinrichtung (130, 170) konfiguriert ist, die Ersatzsignale durch Berechnen eines Mittels aus den Signalen von Zellen, die benachbart zu den defekten Zellen sind, zu erzeugen.

5. Kamera nach einem der Ansprüche 1-4, wobei die Steuereinrichtung (130, 170) angepasst ist, die Blende mit einer niedrigen Geschwindigkeit zu betreiben.

6. Kamera nach einem der vorangehenden Ansprüche, wobei die Steuereinrichtung (130, 170) angepasst ist, die Blende auf Grundlage der vertikalen Periode des CCD-Gerätes (140) zu betreiben.

7. Kamera nach einem der vorangehenden Ansprüche, wobei die Steuereinrichtung (130, 170) angepasst ist, die Blende abwechselnd in ungeraden und geraden Feldern der CCD-Zellen zu betreiben.

8. Kamera nach Anspruch 2 oder 3, wobei:
während des Vergleichsbetriebes die Steuereinrichtung (130, 170) betriebsbereit ist, die aus dem Speicher (160) ausgelesene Ausgabe der einzelnen CCD-Zellen auf einen bestimmten Pegel zu verstärken und die verstärkte Ausgabe mit dem Schwellenwert vergleicht; und
während des Ersatzbetriebes die Steuereinrichtung (130, 170) betriebsbereit ist, die Positionainformationen, die sich auf die CCD-Zellen beziehen, die Ausgaben besitzen, die größer als der Schwellenwert sind, in einem zweiten Bereich des Speichers in einer absteigenden Reihenfolge der Ausgabewerte anzuordnen und zu speichern.

9. Verfahren des Betreibens einer CCD-Kamera mit einem CCD Gerät (140), wobei das Verfahren einen Defektfeststellungsprozess umfasst, mit den Schritten:
Belichten des CCD-Gerätes (140) für einen vorbestimmten Zeitraum;
Analysieren der Ausgabe des CCD-Gerätes (140), die durch das Belichten des CCD-Gerätes (140) für einen vorbestimmten zeitraum erzeugt wird;
Speichern der Position jeder defekten CCD-Zelle, die durch die Analyse bestimmt wurde;
periodisches Durchführen des Defektfeststellungsprozesses während die Kamera zur Verwendung leistungsbetrieben ist, und in einem weiteren Zeitraum Verwenden der gespeicherten Position der defekten CCD-Zellen, um Bilder zu korrigieren, die später bei der Verwendung der Kamera aufgenommen werden.

10. Verfahren nach Anspruch 9, wobei der Schritt des Vergleichens umfasst:
Verstärken der Ausgabe der einzelnen CCD-Zellen; und
Vergleichen der verstärkten Ausgaben der CCD-Zellen mit dem Schwellenwert.

11. Verfahren nach Anspruch 9, mit:
Anordnen der Positionsinformationen, die sich auf die CCD-Zellen beziehen, die größere Ausgabewerte als der Schwellenwert besitzen, in einer absteigenden Reihenfolge der Ausgabewerte nach dem Vergleichen der Ausgaben der einzelnen CCD-zellen mit dem Schwellenwert.

12. Verfahren nach Anspruch 11, wobei:
der Anordnungsschritt das Speichern der angeordneten Ausgabewerte umfasst.

## Patentansprüche (Patentansprüche für folgende(n) Vertragsstaat(en): DE)

1. CCD-Kamera mit:
einem CCD-Gerät (170),
einer Blende (120) zum Steuern der Belichtung des CCD-Gerätes,
einem Speicher (160), und
Steuereinrichtungen (130, 170), die konfiguriert sind, einen CCD-Defektfeststellungsprozess durchzuführen,
mit:
Öffnen der Blende (120) für einen vorbestimmten Zeitraum,
Analysieren der Ausgabe des CCD-Gerätes (140), die durch das Öffnen der Blende für eine vorbestimmten Zeitraum erzeugt wird und
Speichern der durch die Analyse bestimmten Position jeder defekten CCD-Zelle in dem Speicher (160), wobei,
die Steuereinrichtung (130, 170) konfiguriert ist, periodisch den Defektfeststellungsprozess durchzuführen, während die Kamera zur Verwendung leistungsbetrieben ist,
**gekennzeichnet dadurch, dass**
die Steuereinrichtung (130,170) konfiguriert ist, die Blende während des Defektfeststellungsprozesses mit einer niedrigen Geschwindigkeit zu betreiben.

2. Kamera nach Anspruch 1, wobei die Steuereinrichtung (130, 170) konfiguriert ist, während der Bildaufnahme Ersatzausgabesignale für defekte Zellen bereitzustellen, deren Positionen in dem Speicher (160) gespeichert sind.

3. Kamera nach Anspruch 2, wobei die Steuereinrichtung (130, 170) konfiguriert ist, die Ersatzsignale durch Berechnen eines Mittels aus den Signalen von Zellen, die benachbart zu den defekten Zellen sind, zu erzeugen.

4. Kamera nach Anspruch 1, 2 oder 3, wobei die Steuereinrichtung (130, 170) angepasst ist, die Blende auf Grundlage der vertikalen Periode des CCD-Gerätes (140) zu betreiben.

5. Kamera nach einem der vorangehenden Ansprüche, wobei die Steuereinrichtung (130, 170) angepasst ist, die Blende abwechselnd in ungeraden und geraden Feldern der CCD-Zellen zu betreiben.

6. Kamera nach Anspruch 2 oder 3, wobei:
während des Vergleichsbetriebes die Steuereinrichtung (130, 170) betriebsbereit ist, die aus dem Speicher (160) ausgelesene Ausgabe der einzelnen CCD-Zellen auf einen bestimmten Pegel zu verstärken und die verstärkte Ausgabe mit dem Schwellenwert vergleicht; und
während des Ersatzbetriebes die Steuereinrichtung (130, 170) betriebsbereit ist, die Positionsinformationen, die sich auf die CCD-Zellen beziehen, die Ausgaben besitzen, die größer als der Schwellenwert sind, in einem zweiten Bereich des Speichers in einer absteigenden Reihenfolge der Ausgabewerte anzuordnen und zu speichern.

7. Verfahren des Betreibens einer CCD-Kamera mit einem CCD Gerät (140), wobei das verfahren einen Defektfeststellungsprozess umfasst, mit den Schritten:
Belichten des CCD-Gerätes (140) für einen vorbestimmten Zeitraum;
Analysieren der Ausgabe des CCD-Gerätes (140), die durch das Belichten des CCD-Gerätes (140) für einen vorbestimmten Zeitraum erzeugt wird;
Speichern der Position jeder defekten CCD-Zelle, die durch die Analyse bestimmt wurde;
wobei der Defektfeststellungsprozess periodisch durchgeführt wird, während die Kamera zur Verwendung leistungsbetrieben ist,
**gekennzeichnet durch**
Betreiben der Blende mit einer niedrigen Geschwindigkeit während des Defektfeststellungsprozesses.

8. Verfahren nach Anspruch 7, wobei der Schritt des Vergleichens umfasst:
Verstärken der Ausgabe der einzelnen CCD-Zellen; und
Vergleichen der verstärkten Ausgaben der CCD-Zellen mit dem Schwellenwert.

9. Verfahren nach Anspruch 7, mit:
Anordnen der Positionsinformationen, die sich auf die CCD-Zellen beziehen, die größere Ausgabewerte als der Schwellenwert besitzen, in einer absteigenden Reihenfolge der Ausgabewerte nach dem Vergleichen der Ausgaben der einzelnen CCD-Zellen mit dem Schwellenwert.

10. Verfahren nach Anspruch 9, wobei:
der Anordnungsschritt das Speichern der angeordneten Ausgabewerte umfasst.

## Revendications (Revendications pour l'(les) Etat(s) contractant(s) suivant(s): GB,IT, NL)

1. Caméra CCD comprenant :
un dispositif CCD (140),
un obturateur (120) pour commander l'exposition du dispositif CCD,
une mémoire (160), et
un moyen de commande (130, 170) configuré pour effectuer un processus de détection de défauts CCD comprenant les étapes consistant à :
ouvrir l'obturateur (120) pendant une durée prédéterminée,
analyser la sortie du dispositif CCD (140) produite par ladite ouverture de l'obturateur pendant une durée prédéterminée, et
mémoriser l'emplacement de toutes les cellules CCD défectueuses, déterminées par ladite analyse, dans la mémoire (160),
le moyen de commande étant configuré de manière à effectuer périodiquement ledit processus de détection de défauts lorsque la caméra est allumée pour être utilisée et, dans un second temps, utiliser l'emplacement mémorise des cellules CCD défectueuses afin de corriger les images prises ensuite en utilisant la caméra.

2. Caméra selon la revendication 1, dans laquelle le moyen de commande (130, 170) est configuré de sorte que ladite analyse comprenne les étapes consistant à comparer la sortie de chaque cellule du dispositif CCD (140) avec une valeur seuil, et déterminer qu'une cellule est défectueuse si sa sortie est supérieure à la valeur seuil.

3. Caméra selon la revendication 1 ou 2, dans laquelle le moyen de commande (130, 170) est configuré de manière à fournir des signaux de sortie de substitution pour les cellules défectueuses dont les emplacements sont mémorisés dans la mémoire (160) au cours de la capture d'image.

4. Caméra selon la revendication 3, dans laquelle le moyen de commande (130, 170) est configuré pour produire lesdits signaux de substitution en calculant une moyenne des signaux des cellules avoisinantes des cellules défectueuses.

5. Caméra selon l'une quelconque des revendications 1 à 4, dans laquelle le moyen de commande (130, 170) est adapté pour faire fonctionner l'obturateur à faible vitesse.

6. Caméra selon l'une quelconque des revendications précédentes, dans laquelle le moyen de commande (130 170) est adapté pour faire fonctionner l'obturateur sur la base de la période verticale du dispositif CCD (140).

7. Caméra selon l'une quelconque des revendications précédentes, dans laquelle le moyen de commande (130 170) est adapté pour faire fonctionner l'obturateur en alternance dans les champs impairs et dans les champs pairs des cellules CCD.

8. Caméra selon la revendication 2 ou 3, dans laquelle :
au cours de l'opération de comparaison, le moyen de commande (130, 170) peut être utilisé pour amplifier la sortie des cellules CCD individuelles lue à partir de la mémoire (160) à un certain niveau et compare la sortie amplifiée à la valeur seuil ; et
au cours de l'opération de substitution, le moyen de commande (130, 170) peut être utilisé pour classer et mémoriser, dans une seconde région de la mémoire, dans l'ordre décroissant des valeurs sorties, les informations d'emplacement concernant les cellules CCD dont les sorties sont supérieures à la valeur seuil.

9. Procédé pour faire fonctionner une caméra CCD dotée d'un dispositif CCD (140), ledit procédé comprenant un processus de détection de défauts comprenant les étapes consistant à :
exposer le dispositif CCD (140) pendant une durée prédéterminée ;
analyser la sortie du dispositif CCD (140) produite par ladite exposition du dispositif CCD (140) pendant une durée prédéterminée ;
mémoriser l'emplacement des cellules CCD défectueuses déterminées par ladite analyse ; et
effectuer périodiquement ledit processus de détection de défauts lorsque la caméra est allumée pour être utilisée et, dans une seconde période, utiliser l'emplacement mémorisé des cellules CCD défectueuses pour corriger les images prises ensuite en utilisant la caméra.

10. Procédé selon la revendication 9, dans lequel l'étape de comparaison comprend les étapes consistant à
amplifier les sorties des cellules CCD individuelles ; et
comparer les sorties amplifiées des cellules CCD à la valeur seuil.

11. Procédé selon la revendication 9, comprenant les étapes consistant à :
classer dans un ordre décroissant des valeurs de sortie les informations d'emplacement concernant les cellules CCD dont les sorties sont supérieures à la valeur seuil, puis comparer les sorties des cellules CCD individuelles à la valeur seuil.

12. Procédé selon la revendication 11, dans lequel :
l'étape de classement comprend l'étape consistant à mémoriser les valeurs de sortie agencées.

## Revendications (Revendications pour l'(les) Etat(s) contractant(s) suivant(s): DE)

1. Caméra CCD comprenant :
un dispositif CCD (140),
un obturateur (120) pour commander l'exposition du dispositif CCD,
une mémoire (160), et
un moyen de commande (130, 170) configuré pour effectuer un processus de détection de défauts CCD comprenant les étapes consistant à :
ouvrir l'obturateur (120) pendant une durée prédéterminée,
analyser la sortie du dispositif CCD (140) produite par ladite ouverture de l'obturateur pendant une durée prédéterminée, et
mémoriser l'emplacement de toutes les cellules CCD défectueuses, déterminées par ladite analyse, dans la mémoire (160),
le moyen de commande (130, 170) étant configuré pour effectuer périodiquement ledit processus de détection de défauts CCD lorsque la caméra est allumée pour être utilisée,
**caractérisée en ce que** le moyen de commande (130, 170) est configuré pour faire fonctionner l'obturateur à une vitesse faible au cours du processus de détection de défauts.

2. Caméra selon la revendication 1, dans laquelle le moyen de commande (130, 170) est configuré de manière à fournir des signaux de sortie de substitution pour les cellules défectueuses, dont les emplacements sont mémorisés dans la mémoire (160) au cours de la capture d'image.

3. Caméra selon la revendication 2, dans laquelle le moyen de commande (130, 170) est configuré pour produire lesdits signaux de substitution en calculant une moyenne des signaux des cellules avoisinantes des cellules défectueuses.

4. Caméra selon la revendication 1, 2 ou 3, dans laquelle le moyen de commande (130, 170) est adapté pour faire fonctionner l'obturateur sur la base de la période verticale du dispositif CCD (140).

5. Caméra selon l'une quelconque des revendications précédentes, dans laquelle le moyen de commande (130, 170) est adapté pour faire fonctionner l'obturateur en alternance dans les champs impairs et dans les champs pairs des cellules CCD.

6. Caméra selon la revendication 2 ou 3, dans laquelle :
au cours de l'opération de comparaison, le moyen de commande (130, 170) peut être utilisé pour amplifier la sortie des cellules CCD individuelles lue à partir de la mémoire (160) à un certain niveau et compare la sortie amplifiée à la valeur seuil ; et
au cours de l'opération de substitution, le moyen de commande (130, 170) peut être utilisé pour classer et mémoriser, dans une seconde région de la mémoire, dans l'ordre décroissant des valeurs sorties, les informations d'emplacement concernant les cellules CCD dont les sorties sont supérieures à la valeur seuil.

7. Procédé pour faire fonctionner une caméra CCD dotée d'un dispositif CCD (140), ledit procédé comprenant ur processus de détection de défauts comprenant les étapes consistant à :
exposer le dispositif CCD (140) pendant une durée prédéterminée ;
analyser la sortie du dispositif CCD (140) produite par ladite exposition du dispositif CCD (140) pendant une durée prédéterminée, et
mémoriser l'emplacement des cellules CCD défectueuses déterminées par ladite analyse, le processus de détection des défauts étant effectué de manière périodique lorsque la caméra est allumée pour être utilisée,
**caractérisé par** l'étape consistant à faire fonctionner l'obturateur à une vitesse faible au cours du processus de détection de défauts.

8. Procédé selon la revendication 7, dans lequel l'étape de comparaison comprend les étapes consistant à :
amplifier les sorties des cellules CCD individuelles ; et
comparer les sorties amplifiées des cellules CCD a la valeur seuil.

9. Procédé selon la revendication 7, comprenant les étapes consistant à :
classer dans l'ordre décroissant des valeurs de sortie les informations d'emplacement concernant les cellules CCD dont les sorties sont supérieures à la valeur seuil, après comparaison des sorties des cellules CCD individuelles à la valeur seuil.

10. Procédé selon la revendication 9, dans lequel :
l'étape d'agencement comprend l'étape consistant à mémoriser les valeurs de sortie classées.
